Europäisches Patentamt

(19) European Patent Office

Office européen des brevets

(11) EP 0 566 748 B1

(12) **EUROPEAN PATENT SPECIFICATION**

(45) Date of publication and mention
of the grant of the patent:
**02.05.1997 Bulletin 1997/18**

(21) Application number: **92923006.8**

(22) Date of filing: **10.11.1992**

(51) Int. Cl.$^6$: **B01J 35/04**, B01J 37/08

(86) International application number:
**PCT/JP92/01461**

(87) International publication number:
**WO 93/09871 (27.05.1993 Gazette 1993/13)**

(54) **METHOD OF MAKING METALLIC CATALYST CARRIER**

METHODE ZUR HERSTELLUNG EINES METALLISCHEN KATALYSATORTRÄGERS

PROCEDE POUR FABRIQUER UN SUPPORT DE CATALYSEUR METALLIQUE

(84) Designated Contracting States:
**DE FR GB**

(30) Priority: **11.11.1991 JP 294427/91**
**06.11.1992 JP 297033/92**

(43) Date of publication of application:
**27.10.1993 Bulletin 1993/43**

(73) Proprietor: **CALSONIC CORPORATION**
**Nakano-ku, Tokyo 164 (JP)**

(72) Inventors:
• **SUGIMOTO, Tamotsu**
**1-2, Akino**
**Ohra-cho**
**Gunma-ken 370-06 (JP)**

• **SUYAMA, Eizoh**
**4-8-36, Ohsawa**
**Tokyo 181 (JP)**
• **YOSHIDOMI, Yuji**
**8-2, Yoneyamaminami**
**Tochigi-ken 327 (JP)**

(74) Representative: **Kern, Wolfgang, Dipl.-Ing. et al**
**Patentanwälte Kern, Brehm & Partner**
**Albert-Rosshaupter-Strasse 73**
**81369 München (DE)**

(56) References cited:
FR-A- 2 577 616          JP-A- 1 218 636
JP-A- 1 266 978          JP-A- 2 139 044
US-A- 3 856 702          US-A- 4 300 956

## Description

This invention relates to a method for producing a metallic catalyst carrier to be used for a catalytic converter of an automobile, for example.

A type of such a metallic catalyst carrier has been known disclosed in Japanese Patent Application Laid-open No. 266978/1989 and Japanese Patent Application Laid-open No. 139044/1990.

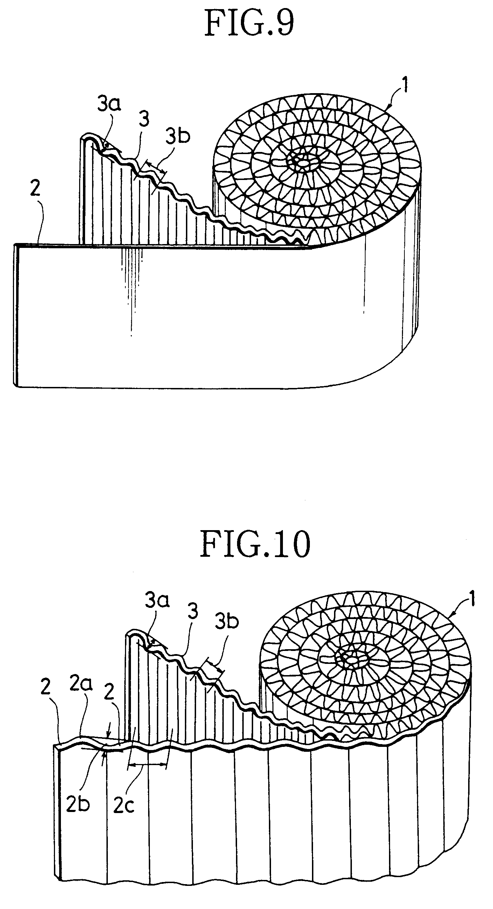

This will be described with reference to Fig. 9 through Fig. 14.

As shown in Fig. 9 or Fig. 10, a metallic catalyst carrier element 1 is prepared by alternately winding flat shaped metallic plate 2 and corrugated metallic plate 3, both consisting of metallic material of Al-containing material.

Height 3a of crest and trough of the waves of the corrugated metallic plate 3 is 0.5 to 3.0 mm, and pitch 3b between crests of the waves is 1.0 to 3.0 mm.

For the metallic catalyst carrier element 1 of Fig. 10, the flat metallic plate 2 has small waves 2a lower than the waves of the corrugated metallic plate 3. These small waves 2a have a height 2b of crest and trough of 0.05 to 0.5 mm and a pitch 2c between crests of 1.0 to 3.0 mm.

Then, this metallic catalyst carrier element 1 is sintered in a vacuum furnace under a temperature of 850 to 1200°C, a degree of vacuum of $10^{-2}$ to $10^{-6}$ Torr (1.33 Pa to $1.33 \times 10^{-4}$ Pa), and a sintering time of 30 minutes to 8 hours.

This sintering causes diffused junction between metallic layers of the metallic plate 2 and the metallic plate 3 to form integrally combined joint 4.

In this diffused junction, mutual metallic atoms diffuse exceeding the boundary at the metal contacting point, eliminating the boundary. Thus, junction is completed.

As a condition for the diffused junction, a temperature shall be $T_D \geq 0.7 T_m$, where $T_D$ represents the lower limit temperature for diffused junction and $T_m$ a metal melting point (about 1450°C). The higher the temperature, the better the diffusion. When the boundary has contamination or surface oxide which prevents diffusion, junction becomes difficult or is not effected.

The metallic catalyst carrier thus structured, as compared with a conventional brazing method, does not need filler metal. Thus, a carrier which is inexpensive and high in strength is prepared with less oxidation degradation by the influence of filler metal.

However, since such a conventional metallic catalyst carrier is produced under the conditions of a high degree of vacuum of $10^{-2}$ to $10^{-6}$ Torr (1.33 Pa to $1.33 \times 10^{-4}$ Pa) and a temperature of 850 to 1200°C, $Al_2O_3$ is not formed on the surface of metallic plates 2 and 3, and metal remains as exposed, so that the improvement of oxidation resistance by the formation of oxide layer possessed by Al-containing material is not expected.

When treated under atmospheric pressure, material is quickly oxidized, producing oxide on the material surface. Thus, junction is hindered.

When oxide is not formed on the entire surface and the diffused junction is partially effected, the metallic catalyst carrier to be obtained by incomplete junction is poor in junction strength.

As a result, as shown in Fig. 12 and Fig. 13, when a test is conducted by placing the obtained metallic catalyst carrier 5 on pored base 7 and pressing it from the above via flat plate 9 which is little smaller than pore 8 of the pored base 7 using an extrusion strength testing machine. As shown in Fig. 14, there is a problem that leading end portion 6 is protruded, or so-called film out is caused. Therefore, to remedy the above problem, the inventor studied from various points to provide a production method which is capable of having oxidation resistance, and found that such a method can be completed by effecting the sintering under conditions of a low vacuum and a temperature of 1200 °C or above.

A method for producing a metallic catalyst carrier is known from document JP-A-1 266 978. According to this method the heating takes place in a vacuum of 0.133 mPa to 1.33 Pa at a temperature of 850 to 1200 °C. The drawbacks of this method are clearly outlined in the description mentioned above.

In document US-A-4 300 956 a method is disclosed in which the metallic catalyst carrier is heated at a temperature of about 1000 to about 1200 °C for a period extending from about 1 to about 2 hours. The pressure is 0.5 to 5 μatm, i.e. 0.05 to 0.5 Pa. Thus, a rather low pressure together with rather long heating periods are proposed in this document.

Document JP-A-1 218 636 discloses a method for producing a metallic catalyst carrier comprising a heating temperature from 850 to 1400 °C and a heating time of preferably from 30 minutes to 8 hours. Pressure values are not mentioned in this document. In examples 1 and 2 of this document the heating time is 2 hours.

It is an object of the present invention to provide a method for producing a metallic catalyst carrier having a better oxidation resistance as well as a better junction strength.

This object is solved by a method comprising the features of claim 1.

An advantageous embodiment of the present invention is mentiond in the subclaim.

According to the present invention the diffused junction as well as the oxidation resistance are improved.

In this invention, first, the metallic catalyst carrier element is formed by alternately winding or laminating metallic plates formed of metallic material of Al-containing material.

Then, this metallic catalyst carrier element is heated at 1200°C or above under a pressure of 1.5Pa to 10Pa for 5 to less than 30 minutes.

Thus, Al atoms of the material form coating as $Al_2O_3$ on the surface of Fe, Cr and Al alloy composition particles, and the material constructing atom moves while diffusing mutually at the contacting sections of the metallic plates to effect diffused junction between the metallic plates.

Preferred embodiments of the present invention are described below with respect to the drawings.

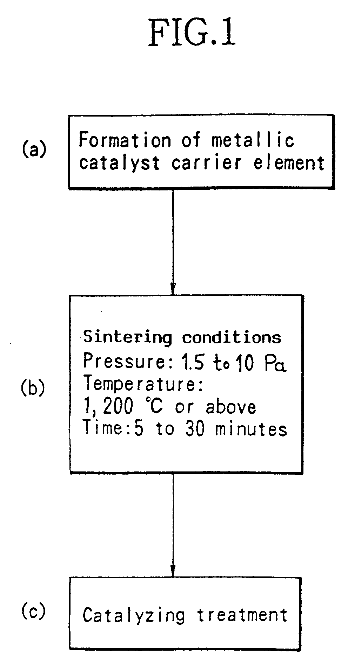

Fig. 1 is a flow chart showing a method for producing a metallic catalyst carrier according to one embodiment of this invention.

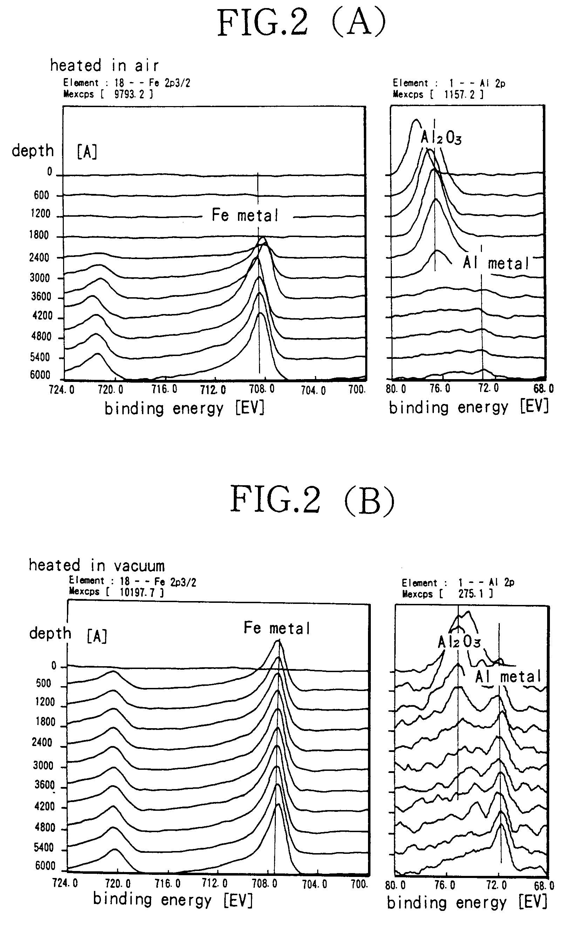

Fig. 2 shows data obtained by analyzing the material surface of the metallic catalyst carrier element obtained by one embodiment of this invention with X-ray electronic spectrum analyzer.

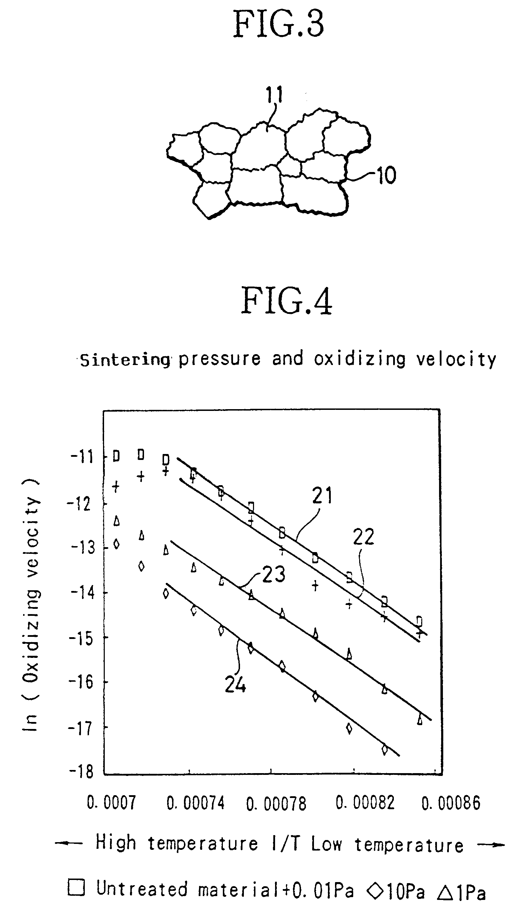

Fig. 3 shows a cross section of the main part of the metallic catalyst carrier element obtained by one embodiment of this invention.

Fig. 4 is a graph showing the relation between sintering pressure and oxidizing velocity.

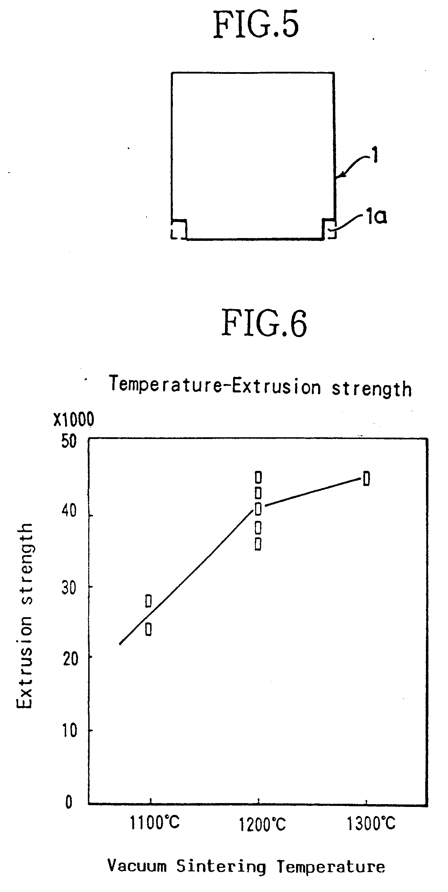

Fig. 5 is a side view showing buckling of the metallic catalyst carrier element.

Fig. 6 is a graph showing the relation between sintering temperature and extrusion strength.

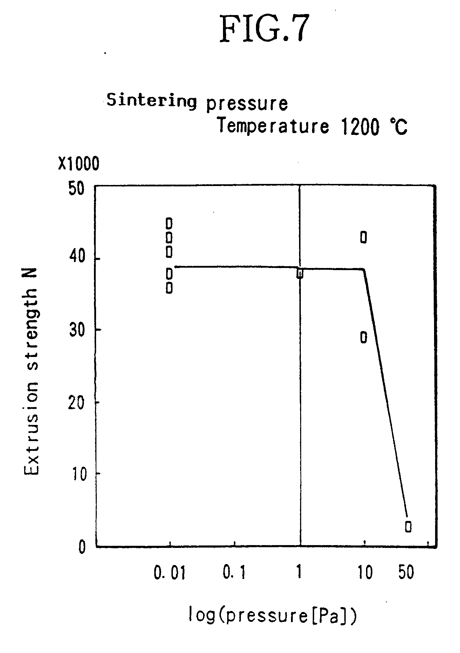

Fig. 7 is a graph showing the relation between sintering pressure and extrusion strength at a sintering temperature of 1200°C.

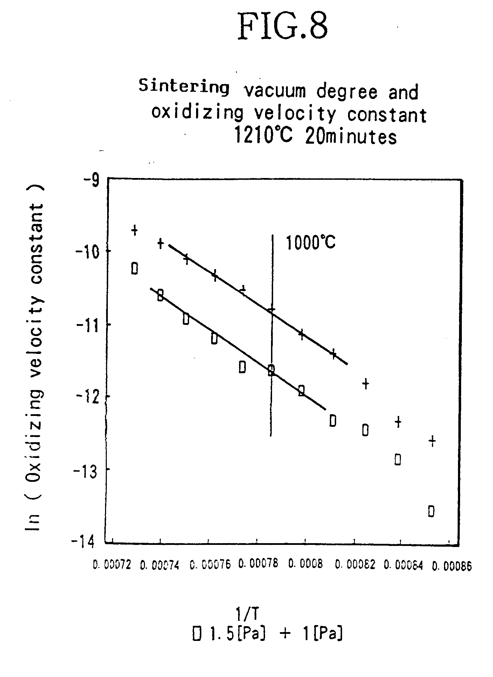

Fig. 8 is a graph showing the relation between sintering degree of vacuum and oxidizing velocity constant.

Fig. 9 is a perspective view of a known metallic catalyst carrier element.

Fig. 10 is a perspective view of the known metallic catalyst carrier element.

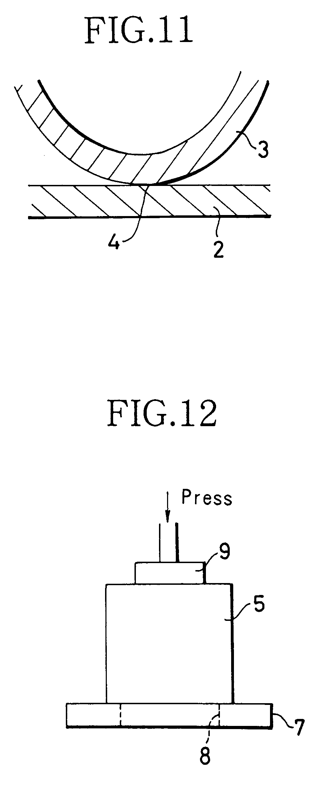

Fig. 11 is a cross section showing a diffused junction part of the conventional metallic catalyst carrier element.

Fig. 12 is an explanatory view showing a measuring method using an extrusion strength testing apparatus of the metallic catalyst carrier element.

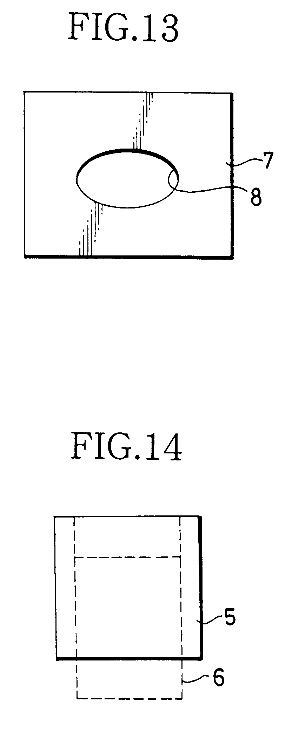

Fig. 13 is a plan view showing the pored base of the extrusion strength testing apparatus of Fig. 12.

Fig. 14 is an explanatory view showing the film-out of the metallic catalyst carrier element.

Fig. 1 is a flow chart showing a method for producing the metallic catalyst carrier according to one embodiment of this invention.

First, in process (a) of Fig. 1, metallic catalyst carrier element 1 is formed by alternately winding flat-shaped metallic plate 2 and corrugated metallic plate 3. The metallic catalyst carrier element 1 wound is retained in the state contacted by the clamping power at winding with an optional jig.

Here, the metallic plates 2 and 3 used a 50-μm 5Al-20Cr-balance of Fe material.

Then, in the process (b) of Fig. 1, the metallic catalyst carrier element 1 was placed in a vacuum furnace and sintered under a pressure of 1.5Pa to 10Pa at 1200°C or above for 5 to less than 30 minutes.

In this sintering process, when Al in the material of the metallic plates 2 and 3 exceeds 1200°C, thin $Al_2O_3$ film 10 is formed on the periphery of Fe, Cr and Al alloy composition particles 11, and strong junction 4 formed of solid diffusion layer is formed on the metallic plates 2 and 3.

Then, in process (c) of Fig. 1, the wash coat treatment (catalyzing treatment) was applied to the metallic catalyst carrier element 1 as the catalyzing treatment according to a normal method.

The element condition of the material surface of the metallic catalyst carrier element 1 thus obtained was analyzed by X-ray electronic spectrum analyzer (ESCA of Shimadzu Corporation). The results are shown in Fig. 2.

In Fig. 2, (A) is the analyzed surface condition of a material sintered under atmosphere at 1200°C for 20 minutes and (B) is the analyzed surface condition of a material sintered in vacuum 1Pa at 1200°C for 20 minutes.

It is seen from Fe and Al of (A) in Fig. 2 that a layer of Al O is formed to the depth of about 1800A from the surface.

It is seen from Fe and Al of (B) in Fig. 2 that Fe metal and Al metal are exposed on the surface.

Although data of Cr is not shown, Cr metal is also exposed on the surface in the same way as Fe and Al.

Therefore, it is noted that in case of (B) of Fig. 2, metal atom diffuses to move at the time of diffused junction treatment, and junction is securely made mutually.

According to the element state analysis shown in Fig. 2, the metal material after the diffused junction treatment was confirmed that thin $Al_2O_3$ film 10 was formed on the periphery of Fe, Cr and Al alloy composition particles 11 in the material as shown in Fig. 3.

In view of the above, the diffused junction of metal is surely effected, and by the thin $Al_2O_3$ film 10 formed on the periphery of Fe, Cr and Al alloy composition particles 11 in the material, possibility of Fe, Cr and Al alloy composition particles in the material to be directly exposed to oxygen is decreased, capable of improving oxidation resistance.

This oxidation resistance will be described below in detail.

Fig. 4 shows the relation between calcination pressure and oxidizing velocity. In the drawing, reference numeral 21 is an untreated material not having undergone the vacuum heat treatment, and 22, 23 and 24 represent differences of oxidizing velocity of each material when calcined under sintering pressure of 0.01Pa, 1Pa and 10Pa respectively.

According to Fig. 4, it is seen that the material sintered at 1Pa or above has an oxidizing velocity of 1/several numbers of that of the untreated material. Here, decrease of the oxidizing velocity means improvement of oxidization resistance. The oxidizing velocity of the material thermally treated in high vacuum is the same with that of the untreated material, and the oxidization resistance is very poor as compared with the treating method under a low vacuum.

The metallic catalyst carrier thus obtained was subjected to the extrusion test by using the extrusion strength test equipment shown in Fig. 12.

As a result, the lower end part 1a of the metallic catalyst carrier was buckled and film out did not take place.

This buckling will be described in detail.

Fig. 6 shows the relation between the sintering temperature and the extrusion strength.

As clear from Fig. 6, at less than 1200°C, the extrusion strength is less than 40,000N, causing film-out in the same manner as a conventional metallic catalyst carrier.

However, when the sintering temperature exceeds 1200 °C, the extrusion strength exceeds 40,000N, and as described above, the lower end part 1a of the metallic catalyst carrier was buckled and the film-out wad not caused.

As clear from Fig. 6, it is seen that diffusion is accelerated and junction becomes strong as the sintering temperature increases.

As described above, it was confirmed that the metallic catalyst carrier causes the film-out when the extrusion strength is less than 40,000N, and that the metallic catalyst carrier 1 is buckled when the extrusion strength is 40,000N or above.

When the sintering temperature is 1200°C, for the relation of the sintering pressure and the extrusion strength, the extrusion strength shows 40,000N in the treatment under a low pressure of less than 10Pa as shown in Fig. 7, and the extrusion strength sharply lowers to below 4,000N in the treatment under a high pressure of above 10Pa.

From the above, it was confirmed that buckling occurs under a low pressure of less than 10Pa and film out occurs under a pressure higher than 10Pa.

Therefore, the processing under a low pressure of less than 10Pa is suitable for diffused junction, and when the extrusion strength test is effected, all the lower end part 1a of the metallic catalyst carrier is buckled.

Further, as to the sintering pressure, it was confirmed by ESCA that when it is 1Pa or below, oxide layer is not formed on the surface of the sintered material, or on the surface of the composition particles. This oxide layer on the surface is a main cause of oxidization resistance of the material.

Therefore, it is understood that in view of oxidization resistance, the sintering pressure is desired to be 1.5Pa to 10Pa.

And, as to the sintering time, strong metallic catalyst carrier 1 having the above oxidization resistance can be obtained in 5 to less than 30 minutes. In less than 5 minutes, reaction of coating the periphery of Fe, Cr and Al alloy composition particles in the material with $Al_2O_3$ cannot be completed, and when it exceeds 30 minutes, the material is possibly deteriorated.

As described above, according to this embodiment, after forming the metallic catalyst carrier element 1 by alternately winding the metallic plates 2 and 3, this metallic catalyst carrier element 1 is sintered under a pressure of 1.5Pa to 10Pa at 1200°C or above, and Al in the material forming the metallic plates 2 and 3 becomes $Al_2O_3$ to coat the surface of the Fe, Cr and Al alloy composition particles 11 in the material to form a film 10 which hardly allows oxygen to pass through. And, metallic atom is exposed at the boundary of the metallic plates 2 and 3 not to prevent atoms from diffusing, so that the junction part 4 can be securely connected.

Then, the pressure at the sintering in the above example is determined to 1Pa and 1.5Pa to experiment the oxidation resistance of the material forming the metallic catalyst carrier.

The sintering temperature was 1210°C and the sintering time was 20 minutes.

The results are shown in Fig. 8.

Here, the oxidizing velocity of the material forming the metallic catalyst carrier was $1.98 \times 10^{-5}$ $(mg/cm^2)^2$/min at 1000°C and 1Pa, and $9.0 \times 10^{-6}$ $(mg/cm^2)^2$/min at 1000°C and 1.5Pa.

The maximum limit oxidization gain of Al of 50 μm 5Al-20Cr-balance Fe material is 0.8 $mg/cm^2$, so it is expressed as $t = P^2/2k$, where t is a time before the complete consumption of Al, P oxidization gain, and k oxidizing velocity constant.

Therefore, at 1Pa, $t = (0.8)^2/(2 \times 1.98 \times 10^{-5}) = 16162$ minutes = 269 hours, and at 1.5Pa, $t = (0.8)^2/(2 \times 9.0 \times 10^{-6}) = 35555$ minutes = 593 hours.

As a result, the material calcined at 1.5Pa resists oxidation for a duration of 2 times of that of 1Pa.

From the above result, it was confirmed that to obtain a metallic catalyst carrier with high safety, it is desirable to make the pressure for sintering to 1.5 Pa or above.

In the above example, the metallic catalyst carrier element 1 was formed by alternately winding the metallic plates 2 and 3, but it may be formed by alternately laminating the metallic plates 2 and 3.

In the above example, the flat metallic plate 2 and the corrugated metallic plate 3 were used for description, but the flat metallic plate 2 may be provided with small wave 2a as shown in Fig. 10.

Further, the material usable in this invention is optional as far as it is generally used for a metallic catalyst carrier. For example, they are 10 to 40 wt% of Cr, 1 to 7 wt% of Al and the balance of Fe; 10 to 40 wt% of Cr, 0.1 to 1 wt% of La, 0 to 1 wt% of Ce, 2.5 wt% of Al and the balance of Fe; 3.5 to 10 wt% of Cr, 1 to 7 wt% of Al, 1.5 wt% of Nb, 0.15 wt% of Zr, 0.1 to 1 wt% of La and the balance of Fe; and 10 to 15 wt% of Cr, 3 to 5.5 wt% of Al, 1 wt% of Mo, 0.1 to 5 wt% of La, 0.01 to 1 wt% of Ce and the balance of Fe.

As described above, according to this invention, as the metallic catalyst carrier element is sintered under a low pressure of 1.5Pa to 10Pa and at a high temperature of 1200°C or above for 5 to less than 30 minutes, Al in the material of the metallic plate becomes $Al_2O_3$, and forms a film which hardly allows oxygen to pass through on the surface of the Fe, Cr and Al alloy composition particles in the material to improve oxidation resistance, and also the strength of the diffused junction part of the metallic plates becomes strong to prevent the film-out.

## Claims

1. A method for producing a metallic catalyst carrier made of an alloy, comprising:

   forming a metallic catalyst carrier element (1) by alternately winding or laminating a first metallic plate (2) and a second metallic plate (3),

   sintering the metallic catalyst carrier element (1) in vacuum, and integrally connecting junction part (4) of the first metallic plate (2) and the second metallic plate (3) by diffused junction, wherein said metallic catalyst carrier element (1) is sintered above a temperature of 1200 °C under a pressure of 1.5 Pa to 10 Pa in 5 to less than 30 minutes.

2. Method according to claim 1, characterized in that the alloy is an Fe, Cr and Al alloy.

## Patentansprüche

1. Verfahren zum Herstellen eines metallischen, aus einer Legierung bestehenden Katalysatorträgers, umfassend:

   Bilden eines metallischen Katalysatorträgerelements (1) durch wechselweises Aufwickeln oder Schichten einer ersten metallischen Platte (2) und einer zweiten metallischen Platte (3),

   Sintern des metallischen Katalysatorträgerelements (1) unter Vakuum und einstückiges Verbinden des Berührungsabschnitts (4) von erster metallischer Platte (2) und zweiter metallischer Platte (3) durch Diffusionsübergang, wobei das metallische Katalysatorträgerelement (1) oberhalb einer Temperatur von 1200 °C unter einem Druck von 1,5 Pa bis 10 Pa während eines Zeitraums von 5 bis unter 30 Minuten gesintert wird.

2. Verfahren nach Anspruch 1, **dadurch gekennzeichnet,** daß die Legierung eine Fe, Cr und Al Legierung ist.

## Revendications

1. Procédé pour la fabrication d'un support de catalyseur métallique établi en un alliage, consistant :

   - à réaliser un élément (1) de support de catalyseur métallique en enroulant ou en laminant de manière alternée une première (2) et une seconde (3) bandes métalliques ;
   - à fritter sous vide ledit élément (1) et à assembler intégralement par jonction diffuse la zone de jonction (4) desdites première (2) et seconde (3) bandes ;

   dans lequel ledit élément (1) est fritté à une température supérieure à 1 200° sous une pression de 1,5 à 10 Pa en un laps de temps compris entre 5 et moins de 30 minutes.

2. Procédé suivant la revendication 1, caractérisé en ce que l'alliage est un alliage Fe, Cr et Al.

# FIG.1

(a) | Formation of metallic
catalyst carrier element

(b) | Sintering conditions
Pressure: 1.5 to 10 Pa
Temperature:
1,200 °C or above
Time:5 to 30 minutes

(c) | Catalyzing treatment

# FIG.2 (A)

heated in air

Element : 18 - - Fe 2p3/2
Mexcps [ 9793.2 ]

Element : 1 - - Al 2p
Mexcps [ 1157.2 ]

# FIG.2 (B)

heated in vacuum

Element : 18 - - Fe 2p3/2
Mexcps [ 10197.7 ]

Element : 1 - - Al 2p
Mexcps [ 275.1 ]

# FIG.3

# FIG.4

Sintering pressure and oxidizing velocity

□ Untreated material+0.01Pa ◇10Pa △1Pa

# FIG.5

1

1a

# FIG.6

Temperature-Extrusion strength

X1000

Extrusion strength

50

40

30

20

10

0

1100°C          1200°C          1300°C

Vacuum Sintering Temperature

# FIG.7

Sintering pressure
Temperature 1200 ℃

# FIG.8

Sintering vacuum degree and
oxidizing velocity constant
1210°C 20minutes

11

# FIG.9

# FIG.10

# FIG.11

# FIG.12

# FIG.13

# FIG.14